# EUROPÄISCHE PATENTANMELDUNG

(11) **EP 3 031 646 A1**
(43) Veröffentlichungstag der Anmeldung: **15.06.2016**
(21) Anmeldenummer: 15195154.8
(22) Anmeldetag: 18.11.2015
(51) Int. Cl.: B60J 10/70, B60J 10/30

(54) **ABDICHTUNGSANORDNUNG FÜR EINE FAHRZEUGSCHEIBE**

(30) Priorität: 12.12.2014 DE 202014106011 U
(71) Anmelder: REHAU AG + Co, 95111 Rehau (DE)
(72) Erfinder: Frank, Michael, 48393 Wixom (US); Sommermann, Ralf, 95131 Schwarzenbach am Wald (DE); Schildbach, Peter, 95126 Schwarzenbach an der Saale (DE); Chlebecek, Wolfgang, 95111 Rehau (DE); Schmidt, Peter, 95030 Hof (DE)

(57) **Zusammenfassung**

Die vorliegende Erfindung betrifft eine Abdichtungsanordnung für eine Fahrzeugscheibe, mit einer Fahrzeugscheibe (10), einem Halteschienenprofil (1) mit einem Rastkanal (2), der durch einen Außenschenkel (3) und einen mit diesem verbundenen Federschenkel (4) gebildet ist, wobei der Federschenkel (4) an seinem oberen Endbereich (5) einen in Richtung des Rastkanals (2) orientierten Rastvorsprung (6) aufweist und das Halteschienenprofil (1) ferner über einen Befestigungsabschnitt (7) an der Fahrzeugscheibe (10) befestigt ist, mit einem Anbauteil (20) das einen von diesem abstehenden Rasthaken (21) aufweist, der mit dem Rastkanal (2) verrastbar ist, wobei der Federschenkel (4) zwischen dem Außenschenkel (3) und dem Befestigungsabschnitt (7) angeordnet ist, wobei zwischen dem Federschenkel (4) und dem Befestigungsabschnitt (7) ein elastisches Federelement (8) derart angeordnet ist, dass der Rasthaken (21) über den Rastvorsprung (6) den Federschenkel (4) in Richtung des Federelementes (8) auslenkt, wenn das Anbauteil (20) mit dem Halteschienenprofil (1) verbunden wird.

## Beschreibung

Die vorliegende Erfindung betrifft eine Abdichtungsanordnung für eine Fahrzeugscheibe. Eine Abdichtungsanordnung gemäß dem Oberbegriff des Schutzanspruchs 1 ist in der WO 2013/120671 A1 offenbart. Nachteilig an der hier dargestellten Abdichtungsanordnung ist, dass der dort beschriebene Federschenkel aufgrund des Metalleinlegers innerhalb des Federschenkels verfahrenstechnisch nur sehr kompliziert hergestellt werden kann. Weiterhin ist die Variation der Federkraft des Federschenkels aufgrund des Metalleinlegers nur eingeschränkt möglich.

Aufgabe der vorliegenden Erfindung ist es daher, eine Abdichtungsanordnung dahingehend zu verbessern, dass diese einfach hergestellt werden kann und eine deutlich größere Variation der Federkraft des Federschenkels und somit der Montagekraft des Anbauteils ermöglicht.

Erfindungsgemäß wird diese Aufgabe gelöst durch eine Abdichtungsanordnung für eine Fahrzeugscheibe, mit einer Fahrzeugscheibe und mit einem Halteschienenprofil, mit einem Rastkanal, der durch einen Außenschenkel und einen mit diesem verbundenen Federschenkel gebildet ist, wobei der Federschenkel an seinem oberen Endbereich einen in Richtung des Rastkanals orientierten Rastvorsprung aufweist und das Halteschienenprofil ferner über einen Befestigungsabschnitt an der Fahrzeugscheibe befestigt ist, und mit einem Anbauteil, das einen von diesem abstehenden Rasthaken aufweist, der mit dem Rastkanal verrastbar ist, wobei der Federschenkel zwischen den Außenschenkel und dem Befestigungsabschnitt angeordnet ist, wobei zwischen dem Federschenkel und dem Befestigungsabschnitt ein elastisches Federelement derart angeordnet ist, dass der Rasthaken über den Rastvorsprung den Federschenkel in Richtung des Federelements auslenkt, wenn das Anbauteil mit dem Halteschienenprofil verbunden wird. Der Federschenkel stützt sich hierbei auf dem Federelement ab. Hierdurch kann die für die Montagekraft verantwortliche Auslenkkraft des Federschenkels durch die Wahl des Federelements bzw. die Dimensionierung des Federelements variiert werden.

Der Federschenkel kann einen sich verjüngenden Abschnitt aufweisen, der als Drehpunkt für die Auslenkung des Federschenkels fungiert. Der sich verjüngende Abschnitt ermöglicht ein gezieltes Auslenken des Federschenkels an einem definierten Drehpunkt, so dass die Montagekraft wesentlich genauer eingestellt werden kann.

Das Halteschienenprofil kann mindestens eine Verstärkungseinlage enthalten, wobei in dem Federschenkel keine Verstärkungseinlage vorgesehen ist. Aufgrund des Vorsehens eines Federelementes kann auf eine Verstärkungseinlage im Bereich des Federschenkels verzichtet werden. Aufgrund des erfindungsgemäß vorgesehenen Federelementes ist es nicht notwendig, die Montagekraft über eine Verstärkungseinlage innerhalb des Federschenkels einzustellen. Dies ermöglicht eine deutlich einfachere Herstellbarkeit des für die Abdichtungsanordnung verwendeten Halteschienenprofils.

Die Verstärkungseinlage kann ein Metall, bevorzugt eine Metallfolie und besonders bevorzugt eine Folie aus Aluminium-, Stahlblech- oder Kupferlegierungen wie Federbronze oder Verstärkungsfasern, bevorzugt Glas-, Kevlar- oder Carbonfasern enthalten.

Das Federelement ist bevorzugt durch ein geschäumtes Polymermaterial gebildet. Das Polymermaterial kann insbesondere mit dem Halteschienenprofil zusammen co-extrudiert sein.

Bei dem Federelement kann es sich auch um ein separat eingelegtes Band handeln, welches über die gesamte Länge bzw. abschnittsweise in das Halteschienenprofil zwischen dem Federschenkel und dem Befestigungsabschnitt formschlüssig und/oder stoffschlüssig und/oder kraftschlüssig angeordnet wird.

In einer vorteilhaften Ausgestaltung der Erfindung ist das Halteschienenprofil über den Befestigungsabschnitt mittels einer Klebeverbindung an der Fahrzeugscheibe befestigt. Die Klebeverbindung wird bevorzugt als Klebefilm oder Klebe-Raupe auf den Befestigungsabschnitt aufgebracht. Übliche Dicken der Klebefilme sind 0,3 mm bis 2 mm.

Das Anbauteil und/oder das Halteschienenprofil enthalten bevorzugt ein Polymer, besonders bevorzugt Polypropylen, Polyvinylchlorid, Acrylnitril-Butadien-Styrol, Copolymere und / oder Gemische.

In einer bevorzugten Ausgestaltung enthält das erfindungsgemäße Federelement Elastomere, thermoplastische Elastomere und bevorzugt Ethylen-Propylen-Dien-Kautschuk, Styrol-Butadien-Kautschuk, Polybutadien-Kautschuk, Nitrilkautschuk, Chloropren-Kautschuk, Fluorkautschuk, Silikonkautschuk, Polypropylen, Polyvinylchlorid, AcrylnitrilButadien-Styrol, Copolymere und / oder Gemische davon.

Das Anbauteil kann insbesondere eine Wasserkastenabdeckung sein.

Des Weiteren umfasst die Erfindung die Verwendung der Abdichtungsanordnung im unteren Bereich einer Kraftfahrzeug-Windschutzscheibe und im hinteren Bereich einer Abdeckung, insbesondere einer Wasserkasten-Abdeckung.

Die Erfindung wird anhand der nachfolgend lediglich ein Ausführungsbeispiel darstellender Figuren dargestellt. Die Figuren zeigen:
- Fig. 1: eine erfindungsgemäße Abdichtungsanordnung für Fahrzeugscheiben während der Auslenkung des Federschenkels bei der Montage des Anbauteils;
- Fig. 2: eine erfindungsgemäße Abdichtungsanordnung im zusammengebauten Zustand.

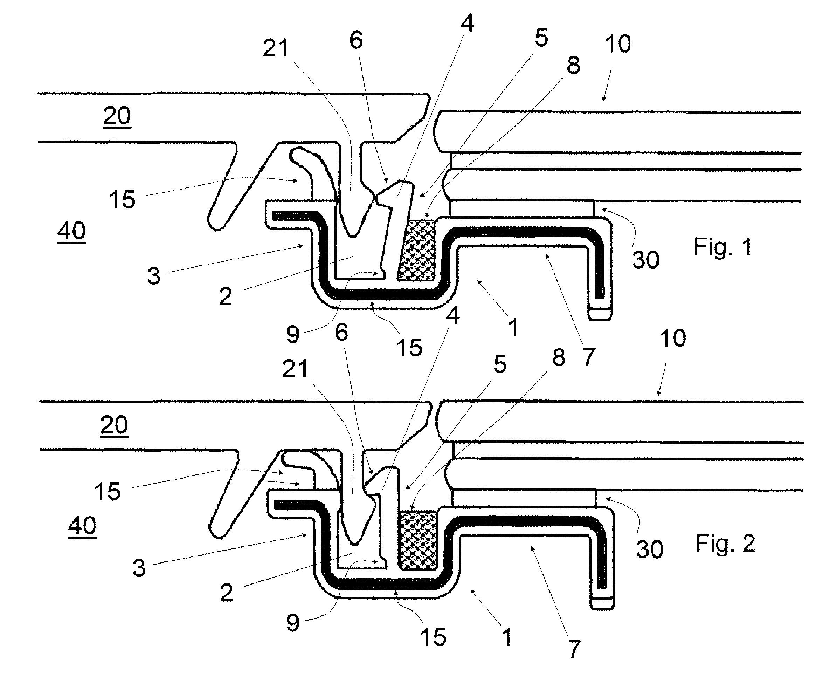

Die Fig. 1 zeigt eine Abdichtungsanordnung für eine Fahrzeugscheibe mit einer Fahrzeugscheibe 10 und mit einem Halteschienenprofil 1 mit einem Rastkanal 2, der durch einen Außenschenkel 3 und einen mit diesem verbundenen Federschenkel 4 gebildet ist. Der Federschenkel 4 weist hierbei an seinem oberen Endbereich 5 einen in Richtung des Rastkanals 2 orientierten Rastvorsprung 6 auf. Das Halteschienenprofil 1 ist ferner über einen Befestigungsabschnitt 7 an der Fahrzeugscheibe 10 befestigt. Der Befestigungsabschnitt 7 ist hierbei über ein doppelseitiges Klebeband 30 mit der Unterseite der Scheibe 10 verbunden. Die Abdichtungsanordnung für eine Fahrzeugscheibe weist ferner ein Anbauteil 20 auf, das ein von diesem abstehenden Rasthaken 21 aufweist, der mit dem Rastkanal 2 verrastbar ist. Der Federschenkel 4 ist zwischen dem Außenschenkel 3 und dem Befestigungsabschnitt 7 angeordnet. Zwischen dem Federschenkel 4 und dem Befestigungsabschnitt 7 ist ein elastisches Federelement 8 derart angeordnet, dass der Rasthaken 21 über den Rastvorsprung 6 den Federschenkel 4 in Richtung des Federelements 8 auslenkt, wenn das Anbauteil 20 mit dem Halteschienenprofil 1 verbunden wird. Hierbei stützt sich der Federschenkel 4 an dem Federelement 8 ab und staucht dieses zusammen. Der Federschenkel 4 weist einen sich verjüngenden Abschnitt 9 auf, der als Drehpunkt für die Auslenkung des Federschenkels 4 fungiert. Das Halteschienenprofil 1 enthält mindestens eine Verstärkungs-Einlage 15, wobei in dem Federschenkel 4 keine Verstärkungs-Einlage 15 vorgesehen ist. Das Federelement 8 ist durch ein geschäumtes Polymermaterial gebildet. Hierbei kann das Polymermaterial mit dem Halteschienenprofil 1 zusammen co-extrudiert sein oder kann ein separat eingelegtes Band aus einem geschäumten polymeren Material sein. In dem in Fig. 1 gezeigten Zustand beim Verbinden von Anbauteil 20 und Halteschienenprofil 1 wird durch den Rastvorsprung 6 des Rasthakens 21 der Federschenkel 4 in Richtung des Federelements 8 ausgelenkt und staucht infolge das Federelement 8 zusammen. Durch die Variation des Materials des Federelements 8, sowie die Dimensionierung und Ausdehnung des Federelements 8 kann so nahezu stufenlos die Federkraft des Federschenkels 4 variiert werden.

Die Fig. 2 zeigt die in Fig. 1 bereits im einzelnen beschriebene Abdichtungsanordnung in ihrem verbundenen Zustand von Anbauteil 20 und Halteschienenprofil 1, wobei der Rasthaken 21 in dem Rastkanal 2 des Halteschienenprofils kraft- und formschlüssig aufgenommen ist. Die Dichtlippe 15 dichtet hierbei die gesamte Anordnung zu dem Abdichtungsraum 40 (beispielsweise den Motorraum) ab.

## Patentansprüche

1. Abdichtungsanordnung für eine Fahrzeugscheibe, mit:
- einer Fahrzeugscheibe (10),
- einem Halteschienenprofil (1) mit einem Rastkanal (2), der durch einen Außenschenkel (3) und einen mit diesem verbundenen Federschenkel (4) gebildet ist,
wobei der Federschenkel (4) an seinem oberen Endbereich (5) einen in Richtung des Rastkanals (2) orientierten Rastvorsprung (6) aufweist und das Halteschienenprofil (1) ferner über einen Befestigungsabschnitt (7) an der Fahrzeugscheibe (10) befestigt ist,
- einem Anbauteil (20) das einen von diesem abstehenden Rasthaken (21) aufweist, der mit dem Rastkanal (2) verrastbar ist, wobei
der Federschenkel (4) zwischen dem Außenschenkel (3) und dem Befestigungsabschnitt (7) angeordnet ist,
**dadurch gekennzeichnet, dass**
zwischen dem Federschenkel (4) und dem Befestigungsabschnitt (7) ein elastisches Federelement (8) derart angeordnet ist, dass der Rasthaken (21) über den Rastvorsprung (6) den Federschenkel (4) in Richtung des Federelementes (8) auslenkt, wenn das Anbauteil (20) mit dem Halteschienenprofil (1) verbunden wird.

2. Abdichtungsanordnung für eine Fahrzeugscheibe nach Anspruch 1, **dadurch gekennzeichnet, dass** der Federschenkel (4) einen sich verjüngenden Abschnitt (9) aufweist, der als Drehpunkt für die Auslenkung des Federschenkels (4) fungiert.

3. Abdichtungsanordnung für eine Fahrzeugscheibe nach Anspruch 1 oder 2, **dadurch gekennzeichnet, dass** das Halteschienenprofil (1) mindestens eine Verstärkungs-Einlage (15) enthält, wobei in dem Federschenkel (4) keine Verstärkungs-Einlage (15) vorgesehen ist.

4. Abdichtungsanordnung für eine Fahrzeugscheibe nach einem der vorstehenden Ansprüche, **dadurch gekennzeichnet, dass** das Federelement (8) durch ein geschäumtes Polymermaterial gebildet ist.

5. Abdichtungsanordnung für eine Fahrzeugscheibe nach Anspruch 4, **dadurch gekennzeichnet, dass** das Polymermaterial mit dem Halteschienenprofil (1) coextrudiert ist.

6. Abdichtungsanordnung für eine Fahrzeugscheibe nach einem der Ansprüche 1 bis 4, **dadurch gekennzeichnet, dass** das Federelement (8) ein separate eingelegtes Band ist.
